# EUROPEAN PATENT SPECIFICATION

(11) **EP 2 680 477 B1**
(45) Date of publication and mention of the grant of the patent: **29.07.2015**
(21) Application number: 13173941.9
(22) Date of filing: 27.06.2013
(51) Int. Cl.: H04L 1/00

(54) **Method and apparatus of handling collisions among channel state information reports**
Verfahren und Vorrichtung zur Handhabung von Kollisionen zwischen Kanalstatusinformationsberichten
Procédé et dispositif de communication de gestion de collisions entre des rapports d'informations d'état de canal

(30) Priority: 28.06.2012 US 201261665320 P; 24.06.2013 US 201313924632
(43) Date of publication of application: 01.01.2014
(73) Proprietor: HTC Corporation, Taoyuan City 330 (TW)
(72) Inventor: Chu, Feng-Seng, 330 Taoyuan City (TW)
(74) Representative: Harrasz, Julia Konstanze

(56) References cited:
- EP-A2- 1 841 276
- US-A1- 2012 076 028
- US-A1- 2012 140 708

## Description

### Background

### 1. Technical Field

The embodiment of the present invention relates to a method used in a wireless communication system and related communication device, and more particularly, to a method of handling collisions among channel state information (CSI) reports in a wireless communication system and related communication device.

### 2. Description of the Prior Art

A long-term evolution (LTE) system, initiated by the third generation partnership project (3GPP), is now being regarded as a new radio interface and radio network architecture that provides a high data rate, low latency, packet optimization, and improved system capacity and coverage. In the LTE system, a radio access network known as an evolved universal terrestrial radio access network (E-UTRAN) includes a plurality of evolved Node-Bs (eNBs) for communicating with a plurality of user equipments (UEs) and communicates with a core network including a mobility management entity (MME), serving gateway, etc for NAS (Non Access Stratum) control.

An LTE-advanced (LTE-A) system, as its name implies, is an evolution of the LTE system. The LTE-A system targets faster switching between power states, improves performance at the coverage edge of an eNB, and includes advanced techniques, such as carrier aggregation (CA), coordinated multipoint (CoMP) transmission/reception, uplink (UL) multiple-input multiple-output (MIMO), etc. For a UE and an eNB to communicate with each other in the LTE-A system, the UE and the eNB must support standards developed for the LTE-A system, such as the 3GPP Rel-10 standard or later versions.

In the LTE system, channel state information (CSI) is needed at transmission points (TPs) for realizing adaptive transmissions. The UE is required to measure channel conditions and transmit corresponding CSI reports to the TPs on a physical uplink control channel (PUCCH). Collision of CSI reports may occur when multiple CSI reports have to be reported at a reporting instance.

In the prior art, if a CSI report with PUCCH reporting type 3, 5, or 6 of one serving cell collides with a CSI report with PUCCH reporting type 1, 1a, 2, 2a, 2b, 2c, or 4 of the same serving cell, the latter CSI report with PUCCH reporting type 1, 1a, 2, 2a, 2b, 2c, or 4 has lower priority and may be dropped.

If the UE is configured with more than one serving cell (e.g., the UE and the eNB support CA), the UE transmits a CSI report of only one serving cell in any given subframe. For a given subframe, if a CSI report with PUCCH reporting type 3, 5, 6, or 2a of one serving cell collides with a CSI report with PUCCH reporting type 1, 1a, 2, 2b, 2c, or 4 of another serving cell, the latter CSI with PUCCH reporting type 1, 1a, 2, 2b, 2c, or 4 has lower priority and may be dropped. For a given subframe, if a CSI report with PUCCH reporting type 2, 2b, 2c, or 4 of one serving cell collides with a CSI report with PUCCH reporting type 1 or 1a of another serving cell, the latter CSI report with PUCCH reporting type 1, or 1a has lower priority and may be dropped.

For a given subframe, if collision among CSI reports of different serving cells with PUCCH reporting type of the same priority occurs, the CSI of the serving cell with lowest serving cell index is reported, and CSI of all other serving cells are dropped.

In other words, when collision of CSI reports occurs, CSI reports with PUCCH reporting type 3, 5, 6, or 2a have higher priority than CSI reports with PUCCH reporting type 2, 2b, 2c, or 4, and CSI reports with PUCCH reporting type 2, 2b, 2c, or 4 have higher priority than CSI reports with PUCCH reporting type 1, or 1a. If CSI reports of different cells have the same priority, the CSI report for the serving cell having the lowest serving cell index is selected. In short, only PUCCH reporting type and serving cell index are considered for prioritizing CSI reports in the collision handling method of the prior art.

For a wireless communication system supporting CoMP transmission/reception, a cell may correspond to multiple TPs. In case of collision among CSI reports of different TPs corresponding to the same serving cells with PUCCH reporting type of the same priority, the priorities of the CSI reports may be the same according to the prior art. Since the benefit of the CoMP technology originates from coordination among TPs, it is inappropriate to follow the conventional method to set priorities of CSI reports in the CoMP technology. Thus, solving collisions among CSI reports while maintaining the benefit of the CoMP technology is a topic to be addressed and discussed.
A patent publication US 2012/076028 A1 discusses information that can be regarded as useful for understanding the background of the invention.

### Summary

The present invention therefore provides a method and related communication device for handling collisions among channel state information (CSI) reports while taking into account of coordination among transmission points (TPs).

The invention is carried out in accordance with the appended claims.

These and other objectives of the present invention will no doubt become obvious to those of ordinary skill in the art after reading the following detailed description of the preferred embodiment that is illustrated in the various figures and drawings.

### Brief Description of the Drawings

FIG. 1 is a schematic diagram of a wireless communication system according to an example of the present invention.
FIG. 2 is a schematic diagram of a communication device according to an example of the present invention.
FIG. 3 is a flowchart of a process according to an example of the present invention.
FIG. 4 is a flowchart of a process according to an example of the present invention.

### Detailed Description

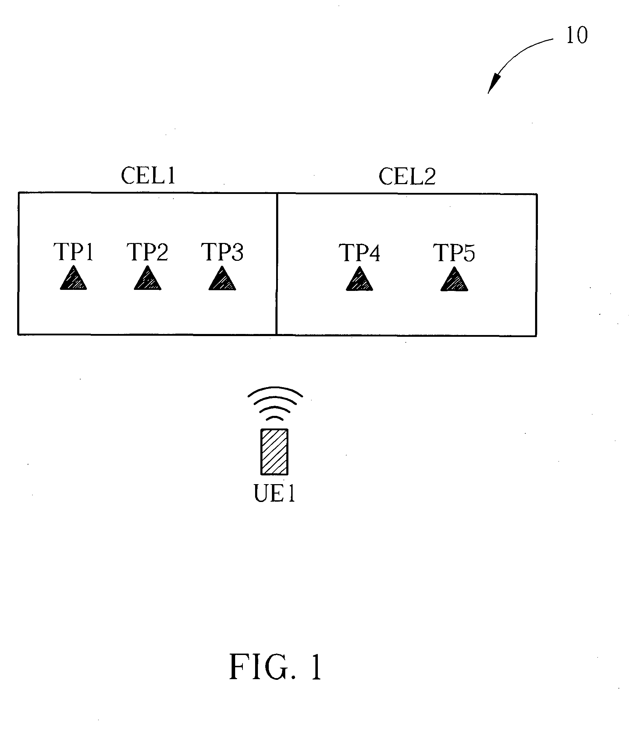

Please refer to FIG. 1, which is a schematic diagram of a wireless communication system 10 according to an example of the present invention. The wireless communication system 10 is briefly composed of two cells (i.e. base stations) CEL1-CEL2 and a user equipment UE1. The cell CEL1 corresponds to transmission points TP1-TP3, and the cell CEL2 corresponds to transmission points TP4-TP5, wherein each of the transmission points TP1-TP5 can perform data transmissions and receptions with the user equipment UE1. The wireless communication system 10 may be a wideband code division multiple access (WCDMA) system such as a universal mobile telecommunications system (UMTS). Alternatively, the wireless communication system 10 may be an orthogonal frequency division multiplexing (OFDM) system and/or an orthogonal frequency division multiple access (OFDMA) system, such as a long term evolution (LTE) system, an LTE-Advanced (LTE-A) system or a successor of the LTE-A system.

The user equipment UE1, cells CEL1-CEL2 and the transmission points TP1-TP5 associated with the cells CEL1-CEL2 are simply utilized for illustrating a structure of the wireless communication system 10. Practically, the transmission points TP1-TP5 can be referred as NodeBs (NBs) in a universal terrestrial radio access network (UTRAN) of the UMTS. Alternatively, the transmission points TP1-TP5 can be evolved NodeBs (eNBs), relay nodes and/or remote radio heads (RRHs) in an evolved UTRAN (E-UTRAN) of the LTE system or the LTE-A system, and are not limited herein. The user equipment UE1 can be mobile devices such as mobile phones, laptops, tablet computers, electronic books, and portable computer systems. In addition, a transmission point and the user equipment UE1 can be seen as a transmitter or a receiver according to transmission direction, e.g., for an uplink (UL), the user equipment UE1 is the transmitter and the transmission point is the receiver, and for a downlink (DL), the transmission point is the transmitter and the user equipment UE1 is the receiver.

Moreover, the wireless communication system 10 can be seen as a multi-point cooperative network composed of multiple transmission points. That is, the UE may transmit a signal (e.g., a packet) to a first set of the transmission points TP1-TP5, and the UE may receive signals transmitted by a second set of the transmission points TP1-TP5, wherein the first set and the second set may be the same or different. As a result, signal quality of the signals is improved. For example, when the wireless communication system 10 is referred to the LTE-A system, it means that the wireless communication system 10 supports coordinated multi-point (CoMP) transmission/reception. The CoMP can be configured as Joint Processing (JP) (e.g., joint transmission (JT) or dynamic point selection) or Coordinated Scheduling/Beamforming (CS/CB), and is not limited. Further, without loss of generality, the transmission point TP1 can be seen as a serving TP for the user equipment UE1, wherein link quality between the transmission point TP1 and the user equipment UE1 is better than link qualities between other transmission points and the user equipment UE1.

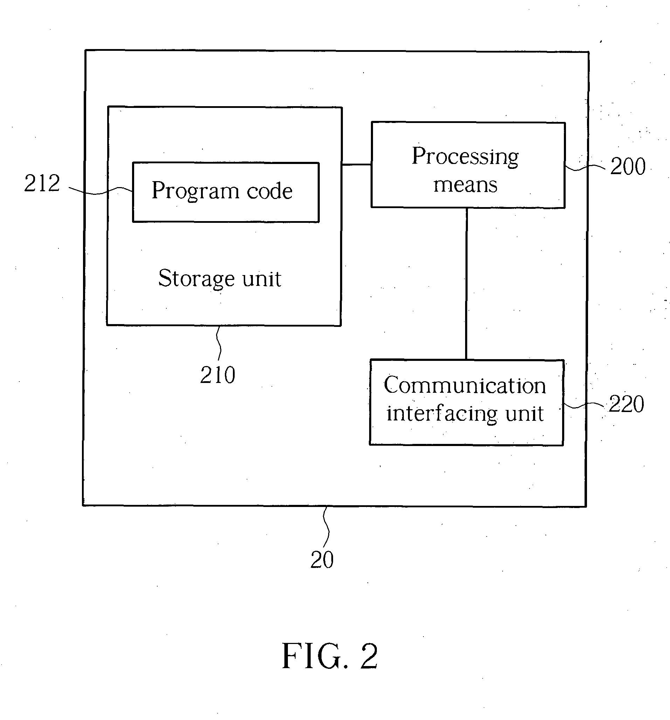

Please refer to FIG. 2, which is a schematic diagram of a communication device 20 according to an example of the present invention. The communication device 20 can be the user equipment UE1 shown in FIG. 1, but is not limited herein. The communication device 20 may include a processing means 200 such as a microprocessor or Application Specific Integrated Circuit (ASIC), a storage unit 210 and a communication interfacing unit 220. The storage unit 210 may be any data storage device that can store a program code 212, accessed and executed by the processing means 200. Examples of the storage unit 210 include but are not limited to a subscriber identity module (SIM), read-only memory (ROM), flash memory, random-access memory (RAM), CD-ROM/DVD-ROM, magnetic tape, hard disk and optical data storage device. The communication interfacing unit 220 is preferably a transceiver and is used to transmit and receive signals (e.g., messages or packets) according to processing results of the processing means 200.

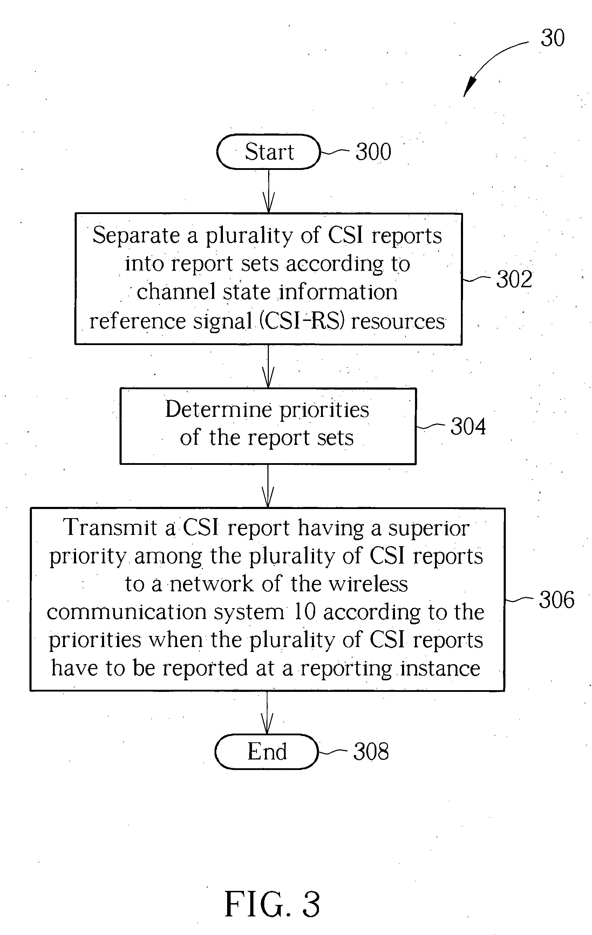

Please refer to FIG. 3, which is a flowchart of a process 30 according to an example of the present invention. The process 30 can be utilized in the user equipment UE1 shown in FIG. 1, for handling collisions among channel state information (CSI) reports in the wireless communication system 10 supporting a technology of coordinated multipoint (CoMP) transmission/reception. The process 30 may be compiled into the program code 212 and includes the following steps:
Step 300: Start.
Step 302: Separate a plurality of CSI reports into report sets according to channel state information reference signal (CSI-RS) resources.
Step 304: Determine priorities of the report sets.
Step 306: Transmit a CSI report having a superior priority among the plurality of CSI reports to a network of the wireless communication system 10 according to the priorities when the plurality of CSI reports have to be reported at a reporting instance.
Step 308: End.

According to the process 30, the user equipment UE1 first separates a plurality of CSI reports into report sets according to CSI-RS resources. Then, the user equipment UE1 may prioritize the report sets so as to transmit a CSI report having a superior priority among the plurality of CSI reports to the network when the plurality of CSI reports have to be reported at a reporting instance (i.e., in the same subframe).

In detail, each CSI report is associated with a non-zero power (NZP) CSI-RS resource which is assigned to a transmission point. In addition, each CSI report is derived under one interference hypothesis corresponding to CSI-RS resources for interference measurement. Therefore, CSI reports with the same NZP CSI-RS and the same interference hypothesis may be grouped as a report set. When CSI reports belonging to different report sets have to be reported in the same reporting instance, priorities for transmitting these CSI reports may be given by determining the priorities of the report sets. Thus, transmitting CSI reports according to the priorities of report sets may solve collisions among CSI reports while considering conditions of the transmission point and interference from other transmission points, and thereby taking coordination among transmission points TP1-TP5 into account.

Note that, the process 30 is an example of the present invention. Those skilled in the art should readily make combinations, modifications and/or alterations accordingly. In an example the priorities of the report sets may be determined based on channel qualities among transmission points TP1-TP5. For example, report sets corresponding to a transmission point with higher channel quality may be given higher priorities. The channel qualities of the transmission points TP1-TP5 may be indicated by channel quality indicators (CQIs), reference signal received power (RSRP), or reference signal received quality (RSRQ).

In another embodiment, the priorities of the report sets may be determined by a transmission scheme. As mentioned previously, a report set is associated with an NZP CSI-RS resource and an interference hypothesis. That is, each report set is corresponded to a transmission scheme. Therefore, the user equipment UE1 may adjust the priorities of the report sets by upgrading a priority for a report set corresponding to a current transmission scheme. For example, the priority of the report set corresponding to the current transmission scheme may be adjusted to a higher priority. In such a condition, the priorities of report sets corresponding to other transmission schemes may remain unadjusted or may be adjusted according to the channel qualities.

In addition, the priorities of the report sets may be determined according to indexes of the report sets. The report sets may be indexed by the NZP CSI-RS resource and CSI-RS resources used to measure interference. More specifically, each CSI-RS resource is designated with a configuration index, and an index of a report set may be derived by an arithmetic combination of the configuration index of the NZP CSI-RS resource with configuration indexes of the CSI-RS resources used for interference measurement. In such a situation, report sets with larger index may be given, for example, higher priority.

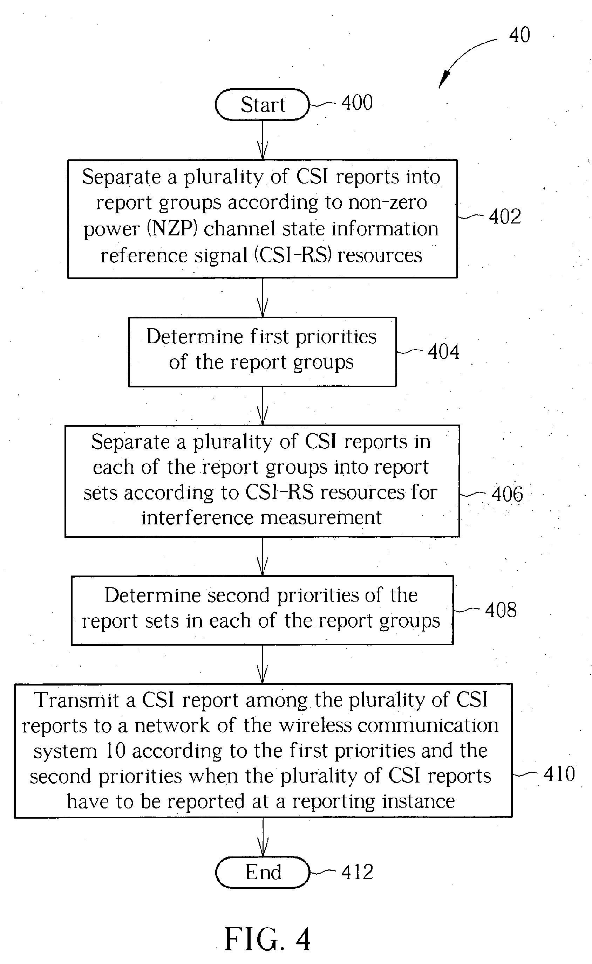

In the above examples, the CSI reports are transmitted according to the priorities of the report sets, and the report sets are determined by considering NZP CSI-RS resources and CSI-RS resources for interference measurement simultaneously. In the embodiment of the invention the CSI reports are transmitted by considering NZP CSI-RS resources first and then CSI-RS resources for interference measurement. For example, please refer to FIG. 4, which is a flowchart of a process 40 according to an example of the present invention. The process 40 can be utilized in the user equipment UE1 shown in FIG. 1, for handling collisions among channel state information (CSI) reports in the wireless communication system 10 supporting a technology of coordinated multipoint (CoMP) transmission/reception. The process 40 may be compiled into the program code 212 and includes the following steps:
Step 400: Start
Step 402: Separate a plurality of CSI reports into report groups according to non-zero power (NZP) channel state information reference signal (CSI-RS) resources.
Step 404: Determine first priorities of the report groups.
Step 406: Separate a plurality of CSI reports in each of the report groups into report sets according to CSI-RS resources for interference measurement.
Step 408: Determine second priorities of the report sets in each of the report groups.
Step 410: Transmit a CSI report among the plurality of CSI reports to a network of the wireless communication system 10 according to the first priorities and the second priorities when the plurality of CSI reports have to be reported at a reporting instance.
Step 412: End.

According to the process 40, the user equipment UE1 separates a plurality of CSI reports into report groups according to NZP CSI-RS resources (i.e. transmission points), and determine priorities of the report groups. Then, the user equipment UE1 further separates the CSI reports in each of the report groups into report sets according to CSI-RS resources for interference measurement (i.e. interference hypotheses), and determine priorities of the report sets. As a result, when the plurality of CSI reports have to be reported at a reporting instance (i.e. in the same subframe), the user equipment UE1 may consider the priorities of the report groups first and then consider the priorities of the report sets, so as to transmit a CSI report to the network.

In an embodiment, the priorities of the report groups may be determined according to fairness among transmission points TP1-TP5. For example, the priorities of the report groups may be determined according to a historical record of the user equipment UE1. The historical record may list an amount of CSI report transmissions for each of the report groups (i.e. for each of the transmission points TP1-TP5). Therefore, the report group which has been reported more times in the historical record has lower priority.

In another example, the priorities of the report groups with CSI reports having better channel quality are given higher priority. The channel quality may be determined through channel measurement indexes such as CQI, RSRP or RSRQ.

Furthermore, a report group of a serving TP may be given higher priority. For example, the user equipment UE1 may adjust the priorities of the report groups by upgrading a priority for a report group corresponding to a serving transmission point. The priorities for other report groups may remain unadjusted. Alternatively, the priorities for other report groups may be given the same priority or adjusted according to the channel qualities or the fairness among transmission point as abovementioned embodiments.

After determining the priorities of the report groups, the report sets in the same report group may be prioritized according to the channel qualities and/or the transmission scheme. Namely, the report set with higher channel quality is given higher priority, which may be determined through channel measurement indexes such as CQI, RSRP or RSRQ. Alternatively, the report set corresponds to the current transmission scheme is given higher priority.

Note that, detail of a CSI report mentioned above is not limited. For example, the CSI report may include one or more fields which include a Channel Quality Indicator (CQI), a Precoding Matrix Index (PMI), a Rank Indicator (RI) and/or a Precoder Type Indicator (PTI).

In addition, when CSI reports in the same report set have to be reported in the same instance (i.e. in the same subframe), the collision may be solved by further considering the PUCCH reporting type of the CSI reports. For example, a CSI report with PUCCH reporting type 3, 5, or 6 in a report set is given higher priority than a CSI report with PUCCH reporting type 1, 1a, 2, 2a, 2b, 2c, or 4 in the same report set.

In addition, if multiplexing multiple CSI reports in one reporting instance is not allowed in the wireless communication system 10, the user equipment UE1 may select the CSI report with the highest priority to transmit to the network. If multiplexing multiple CSI reports is supported in the wireless communication system 10, the user equipment UE1 may multiplex and then transmit the CSI reports according to the corresponding priorities.

Those skilled in the art should readily make combinations, modifications and/or alterations on the abovementioned description and examples. The abovementioned steps of the processes 30, 40 including suggested steps may be realized by means of a hardware, a firmware known as a combination of a hardware device and computer instructions and data that reside as read-only software on the hardware device, or an electronic system. Examples of hardware may include analog, digital and mixed circuits known as microcircuit, microchip, or silicon chip. Examples of the electronic system can include a system on chip (SOC), system in package (SiP), a computer on module (COM), and the communication device 20.

To sum up, the present invention provides a method for handling collisions among CSI reports. The method may consider fairness, channel qualities, transmission schemes, and the serving transmission point among transmission points in a wireless communication system. Thus, collisions among CSI reports may be solved and coordination among transmission points may be taken into account as well, which is especially suitable for a wireless communication system supporting a technology of CoMP transmission/reception.

Those skilled in the art will readily observe that numerous modifications and alterations of the device and method may be made while retaining the teachings of the invention. Accordingly, the above disclosure should be construed as limited only by the metes and bounds of the appended claims.

## Claims

1. A method of handling collisions among channel state information, CSI, reports for a user equipment (UE1,20) in a wireless communication system supporting a technology of coordinated multipoint, CoMP, transmission/reception, comprising the steps of:
separating (402) a plurality of CSI reports into report groups according to non-zero power, NZP, channel state information reference signal, CSI-RS, resources, each NZP CSI-RS resource is assigned to a transmission point (Tp1...TP5), wherein each transmission point can perform data transmissions and receptions with the user equipment;
determining (404) first priorities of the report groups;
separating (406) a plurality of CSI reports in each of the report groups into report sets according to CSI-RS resources for interference measurement, the CSI-RS resources for interference measurement correspond to interference hypothesis used to derive each CSI report;
determining (408) second priorities of the report sets in each of the report groups;
and
transmitting (410) a CSI report among the plurality of CSI reports to a network of the wireless communication system according to the first priorities and the second priorities when the plurality of CSI reports have to be reported at a reporting instance.

2. The method of claim 1, wherein the step of determining the first priorities of the report groups comprises:
determining the first priorities of the report groups according to a historical record of the user equipment or channel qualities, wherein the historical record comprises an amount of CSI report transmissions for each of the report groups.

3. The method of claim 1, further comprising:
adjusting the first priorities by upgrading a priority for a report group corresponding to a serving transmission point.

4. A communication apparatus (UE1,20) for handling collisions among channel state information, CSI, reports in a wireless communication system supporting a technology of coordinated multipoint, CoMP, transmission/reception, the communication apparatus comprising:
a processing means (200);
a storage unit (210); and
a program code (212), stored in the storage unit, which instructs the processing means to execute the following steps:
separating (402) a plurality of CSI reports into report groups according to non-zero power, NZP, channel state information reference signal, CSI-RS, resources, each NZP CSI-RS resource is assigned to a transmission point, wherein each transmission point can perform data transmissions and receptions with the user equipment;
determining (404) first priorities of the report groups;
separating (406) a plurality of CSI reports in each of the report groups into report sets according to CSI-RS resources for interference measurement, the CSI-RS resources for interference measurement correspond to interference hypothesis used to derive each CSI report;
determining (408) second priorities of the report sets in each of the report groups;
and
transmitting (410) a CSI report among the plurality of CSI reports to a network of the wireless communication system according to the first priorities and the second priorities when the plurality of CSI reports have to be reported at a reporting instance.

5. The communication apparatus of claim 4, wherein the step of determining the first priorities of the report groups comprises:
determining the first priorities of the report groups according to a historical record of the communication apparatus or channel qualities, wherein the historical record comprises an amount of CSI report transmissions for each of the report groups.

6. The communication apparatus of claim 4, wherein the program code further instructs the processing means to execute the following step:
adjusting the first priorities by upgrading a priority for a report group corresponding to a serving transmission point.

## Patentansprüche

1. Ein Verfahren zum Handhaben von Kollisionen zwischen
Kanalstatusinformationsberichten, CSI-Berichten, für ein Benutzergerät (UE1, 20) in einem drahtlosen Kommunikationssystem, das eine Technologie der CoMP-Übertragung/des CoMP-Erhalts (CoMP = Coordinated Multipoint) unterstützt, beinhaltend folgende Schritte:
Aufteilen (402) einer Vielzahl von CSI-Berichten in Berichtgruppen gemäß Nicht-Nullleistungs-Kanalstatusinformation-Referenzsignal-Ressourcen, NZP-CSI-RS-Ressourcen, wobei jede NZP-CSI-RS-Ressource einem Übertragungspunkt (TP1...TP5) zugeordnet ist, wobei jeder Übertragungspunkt Datenübertragungen und -empfänge mit dem Benutzergerät durchführen kann;
Bestimmen (404) erster Prioritäten der Berichtgruppen;
Aufteilen (406) einer Vielzahl von CSI-Berichten in jeder der Berichtgruppen in Berichtsätze gemäß CSI-RS-Ressourcen zur Interferenzmessung, wobei die CSI-RS-Ressourcen zur Interferenzmessung einer Interferenzhypothese entsprechen, die zum Erlangen jedes CSI-Berichts verwendet wird;
Bestimmen (408) zweiter Prioritäten der Berichtsätze in jeder der Berichtgruppen; und
Übertragen (410) eines CSI-Berichts zwischen der Vielzahl von CSI-Berichten an ein Netz des drahtlosen Kommunikationssystems gemäß den ersten Prioritäten und den zweiten Prioritäten, wenn ein Berichten der Vielzahl von CSI-Berichten an einer Berichtsinstanz nötig ist.

2. Verfahren gemäß Anspruch 1, wobei der Schritt des Bestimmens der ersten Prioritäten der Berichtgruppen Folgendes beinhaltet:
Bestimmen der ersten Prioritäten der Berichtgruppen gemäß einer Stammaufzeichnung des Benutzergeräts oder Kanalqualitäten, wobei die Stammaufzeichnung eine Menge an CSI-Berichtübertragungen für jede der Berichtgruppen beinhaltet.

3. Verfahren gemäß Anspruch 1, das ferner Folgendes beinhaltet:
Anpassen der ersten Prioritäten durch das Höherstufen einer Priorität für eine Berichtgruppe entsprechend einem Serving-Übertragungspunkt.

4. Ein Kommunikationsgerät (UE1, 20) zum Handhaben von Kollisionen zwischen Kanalstatusinformationsberichten, CSI-Berichten, in einem drahtlosen Kommunikationssystem, das eine Technologie der CoMP-Übertragung/des CoMP-Erhalts unterstützt, wobei das Kommunikationsgerät Folgendes beinhaltet:
ein Verarbeitungsmittel (200);
eine Speichereinheit (210); und
einen in der Speichereinheit gespeicherten Programmcode (212), der das Verarbeitungsmittel anweist, die folgenden Schritte auszuführen:
Aufteilen (402) einer Vielzahl von CSI-Berichten in Berichtgruppen gemäß Nicht-Nullleistungs-Kanalstatusinformation-Referenzsignal-Ressourcen, NZP-CSI-RS-Ressourcen, wobei jede NZP-CSI-RS-Ressource einem Übertragungspunkt zugeordnet ist, wobei jeder Übertragungspunkt Datenübertragungen und -empfänge mit dem Benutzergerät durchführen kann;
Bestimmen (404) erster Prioritäten der Berichtgruppen;
Aufteilen (406) einer Vielzahl von CSI-Berichten in jeder der Berichtgruppen in Berichtsätze gemäß CSI-RS-Ressourcen zur Interferenzmessung, wobei die CSI-RS-Ressourcen zur Interferenzmessung einer Interferenzhypothese entsprechen, die zum Erlangen jedes CSI-Berichts verwendet wird;
Bestimmen (408) zweiter Prioritäten der Berichtsätze in jeder der Berichtgruppen; und
Übertragen (410) eines CSI-Berichts zwischen der Vielzahl von CSI-Berichten an ein Netz des drahtlosen Kommunikationssystems gemäß den ersten Prioritäten und den zweiten Prioritäten, wenn ein Berichten der Vielzahl von CSI-Berichten an einer Berichtsinstanz nötig ist.

5. Kommunikationsgerät gemäß Anspruch 4, wobei der Schritt des Bestimmens der ersten Prioritäten der Berichtgruppen Folgendes beinhaltet:
Bestimmen der ersten Prioritäten der Berichtgruppen gemäß einer Stammaufzeichnung des Kommunikationsgeräts oder Kanalqualitäten, wobei die Stammaufzeichnung eine Menge an CSI-Berichtübertragungen für jede der Berichtgruppen beinhaltet.

6. Kommunikationsgerät gemäß Anspruch 4, wobei der Programmcode ferner das Verarbeitungsmittel anweist, den folgenden Schritt auszuführen:
Anpassen der ersten Prioritäten durch das Höherstufen einer Priorität für eine Berichtgruppe entsprechend einem Serving-Übertragungspunkt.

## Revendications

1. Une méthode de gestion de collisions entre des rapports d'information d'état du canal, CSI, pour un équipement utilisateur (UE1, 20) dans un système de communication sans fil supportant une technologie de transmission/réception multipoint coordonnée, CoMP, comprenant les étapes consistant à :
séparer (402) une pluralité de rapports CSI en groupes de rapports selon des ressources de signal de référence d'information d'état du canal, CSI-RS, de puissance non nulle, NZP, chaque ressource CSI-RS NZP est assignée à un point de transmission (TP1 ...TP5), où chaque point de transmission peut effectuer des transmissions et des réceptions de données avec l'équipement utilisateur ;
déterminer (404) des premières priorités des groupes de rapports ;
séparer (406) une pluralité de rapports CSI dans chacun des groupes de rapports en ensembles de rapports selon des ressources CSI-RS pour la mesure d'interférence, les ressources CSI-RS pour la mesure d'interférence correspondent à une hypothèse d'interférence utilisée pour dériver chaque rapport CSI ;
déterminer (408) des deuxièmes priorités des ensembles de rapports dans chacun des groupes de rapports ; et
transmettre (410) un rapport CSI d'entre la pluralité de rapports CSI à un réseau du système de communication sans fil selon les premières priorités et les deuxièmes priorités lorsque la pluralité de rapports CSI doivent être rapportés à une instance de présentation de rapport.

2. La méthode de la revendication 1, où l'étape consistant à déterminer les premières priorités des groupes de rapports comprend :
le fait de déterminer les premières priorités des groupes de rapports selon un historique de l'équipement utilisateur ou des qualités du canal, où l'historique comprend une quantité de transmissions de rapports CSI pour chacun des groupes de rapports.

3. La méthode de la revendication 1, comprenant en sus :
le fait d'ajuster les premières priorités en mettant à niveau une priorité pour un groupe de rapports correspondant à un point de transmission en service.

4. Un appareil de communication (UE1, 20) destiné à la gestion de collisions entre des rapports d'information d'état du canal, CSI, dans un système de communication sans fil supportant une technologie de transmission/réception multipoint coordonnée, CoMP, l'appareil de communication comprenant :
un moyen de traitement (200) ;
une unité de stockage (210) ; et
un code programme (212), stocké dans l'unité de stockage, qui donne l'instruction au moyen de traitement d'exécuter les étapes suivantes :
séparer (402) une pluralité de rapports CSI en groupes de rapports selon des ressources de signal de référence d'information d'état du canal, CSI-RS, de puissance non nulle, NZP, chaque ressource CSI-RS NZP est assignée à un point de transmission, où chaque point de transmission peut effectuer des transmissions et
réceptions de données avec l'équipement utilisateur ;
déterminer (404) des premières priorités des groupes de rapports ;
séparer (406) une pluralité de rapports CSI dans chacun des groupes de rapports en ensembles de rapports selon des ressources CSI-RS pour la mesure d'interférence, les ressources CSI-RS pour la mesure d'interférence correspondent à une hypothèse d'interférence utilisée pour dériver chaque rapport CSI ;
déterminer (408) des deuxièmes priorités des ensembles de rapports dans chacun des groupes de rapports ; et
transmettre (410) un rapport CSI d'entre la pluralité de rapports CSI à un réseau du système de communication sans fil selon les premières priorités et les deuxièmes priorités lorsque la pluralité de rapports CSI doivent être rapportés à une instance de présentation de rapport.

5. L'appareil de communication de la revendication 4, où l'étape consistant à déterminer les premières priorités des groupes de rapports comprend :
le fait de déterminer les premières priorités des groupes de rapports selon un historique de l'appareil de communication ou des qualités du canal, où l'historique comprend une quantité de transmissions de rapports CSI pour chacun des groupes de rapports.

6. L'appareil de communication de la revendication 4, où le code programme donne en sus l'instruction au moyen de traitement d'exécuter l'étape suivante :
ajuster les premières priorités en mettant à niveau une priorité pour un groupe de rapports correspondant à un point de transmission en service.
